# EUROPEAN PATENT APPLICATION

(11) **EP 1 037 425 A2**
(43) Date of publication of application: **20.09.2000**
(21) Application number: 00104543.4
(22) Date of filing: 13.03.2000
(51) Int. Cl.: H04L 1/00

(54) **Apparatus and method for integrating error control and authentication for satellite uplinks**

(30) Priority: 16.03.1999 US 270337
(71) Applicant: TRW Inc., Redondo Beach, California 90278 (US)
(72) Inventor: Wright, David A., Solana Beach, CA 92075 (US); Caso, Gregory S., Hermosa Beach, CA 90254 (US)
(74) Representative: Schmidt, Steffen J., Dipl.-Ing.

(57) **Abstract**

A method and apparatus (200) for generating a sender authenticatable codeword (152) for transmission in an uplink to a satellite are presented. A method and apparatus (202) for authenticating a codeword (152) transmitted in a satellite uplink are also presented. The generation of a sender authenticatable codeword (152) is performed by combining an information block (143) and an authenticating filling sequence block (144). A parity block (148) is formed over the combined block (146) and the resultant true codeword (150) is truncated to remove part or all of the authenticating filling sequence block (144). Authentication of the codeword (152) is performed by receiving an observable (152') and combining an authenticating filling sequence block (144') with the observable (152') to form an extended observable (150'). The extended observable (150') is decoded and a decoded observable and an error rate estimate formed. Authenticity is then determined based on the error rate estimate, which may be an error rate estimate for the authenticating filling sequence block (144') portion of the decoded observable (154').

## Description

### BACKGROUND OF THE INVENTION

The present invention relates to authentication methods. In particular, the present invention relates to integrating error control with authentication without using encryption.

Present satellite communication systems often encode data, using Reed-Solomon (RS) codes, before transmission in an uplink to a satellite. The RS codes are used to effect error correction and reduce the power required to transmit on the uplink (although at the expense of increasing the required bandwidth). An RS code is described by the field size q from which the codeletters (or symbols) of its codewords are drawn, by the length n of its codewords and by the size k of its information content, where n and k are measured in symbols and written as a pair (n,k). The difference, n-k, is the amount of redundancy associated with the RS code and is usually an even number 2*t, where t is the number of symbol errors that the RS code is guaranteed to correct. The redundant portion of a codeword occupying 2*t symbols is referred to as the parity block. As one example, t may be 12, and the associated parity block is 24 symbols in length.

Typical systems utilizing RS coding use a field size q=2^{v}, where v is an integer, often 8, over a Galois Field of 256 elements, or GF(256). Each element is an octet (8 bits), or a byte in common terminology. When a full length RS code is used, the codeword length n is q-1, in general. Shortened RS codes may also be used and have n less than q-1.

When a shortened RS code is used, however, it is necessary to establish a formal convention between the sender and receiver to account for the shortening. In essence, (conceptually) both the sender and receiver prepend a q-1-n element block f(X) to the shortened information block, to bring the combined block (of the information block plus f(X)) to the length q-1-(2*t) symbols. In current practice, both the sender and receiver assume that all the bytes in f(X)= 0. The parity block formed using the all-zero filling sequence block is the same as a parity block formed over just the information block, even though the parity block takes into consideration both the information block and the fill sequence block. Because the parity block is not a function of the fill sequence block in current practice since f(X)= 0, fill sequence blocks and parity blocks formed therefrom do not perform an authentication function.

Authentication functions in many forms have been employed to prevent unauthorized access to and usage of telecommunication systems. However, nearly all of today's authentication methods are based on the principles and teachings of Diffie and Hellman, who discovered that a true digital signature could be formed by using two cryptographic keys (public-key encryption), and/or Rivest, Shamir, and Adleman ("RSA"), who developed an algorithm (the "RSA algorithm") for public-key encryption. Generally, the RSA algorithm multiplies two large prime numbers, and derives a set of two numbers that constitute a private key and a public key. The RSA algorithm was first described in Rivest et al., U.S. Patent No. 4,405,829, entitled "Cryptographic Communication System and Method."

Cryptography techniques provide both encryption and authentication. Authentication refers to the process of identifying the sender of the message, analogous to the way one's handwritten signature provides authentication of an executed document. The sender of a message typically "signs" the message with a digital signature and appends it to the message. Alternatively, authentication may certify that the message is from a member of an authorized group, without specifically identifying the sender.

In the past, proposed authentication methods have provided an explicit digital signature that is unique to each user transmitting data in an uplink. This digital signature is a bit pattern that is formed by an authorized user by hashing a commonly known variable ("hashing variable") using a secret key known only to users in the authorized set and to the satellite. A hashing variable is any variable that is known to both the sender and recipient. As examples, in satellite communication systems, the uplink frame or slot number may be used as the hashing variable. The digital signature is then placed as an overhead item in the uplink burst (typically by appending the signature to the data stream). The satellite validates the digital signature by reversing the hashing operation using the secret key and commonly known variable. If the burst fails validation, it may be discarded. Thus, while existing authentication methods provide increased security, they do so at the expense of information throughput.

The inherent bandwidth and power limitations of present communication systems place a high economic value on information throughput. In past systems, the overhead generated by a digital signature, however, reduced information throughput by devoting a portion of that throughput to the signature itself. Thus, incorporating the signature as overhead decreased information throughput, increased the complexity of the communication systems, and decreased the economic gains of operating a communication system.

Past systems employing multi-beam frequency reuse processing satellites also suffered from a phenomenon known as show-thru. Consider, for example, two beams A and B in the satellite's coverage that are spatially separate but which share a common frequency. A burst that is sent in beam B may appear, due to antenna sidelobe effects, for example, in the receiver for beam A. When there is no burst present in beam A, beam A is said to be in a quiescent condition. Show-thru occurs when the beam A receiver, in the quiescent condition, collects enough energy from beam B to allow the beam A receiver to decode beam B.

Spurious show-thru is an undesirable occurrence in a processing satellite system which uses ATM (asynchronous transfer mode) switching since misinserted cells may ultimately arrive at a destination terminal, resulting in an increase in CMR (cell misinsertion rate).

Past satellite communication systems may also encrypt the data content of uplink bursts in order to prevent unauthorized use of information in an uplink burst in addition to ensuring privacy. Although encryption may provide an authentication method, it also complicates exportation of satellite technology because the United States places limits on the ability to export encryption techniques and products.

Therefore, a need is present in the industry for an improved authentication method that minimizes or eliminates overhead and that can be used in satellite communications without encryption. Additionally, a need is present in the industry for an improved authentication method that minimizes or eliminates show-thru.

### BRIEF SUMMARY OF THE INVENTION

One object of the invention is to provide an authentication method for a communication system without adding overhead.

Another object of the invention is to provide an authentication method and a communication system that protects against unauthorized usage of a satellite uplink.

An additional object of the invention is to provide an authentication method and a communication system compatible with existing error correction hardware.

Still another object of the invention is to provide an authentication method for a communication system that does not encrypt the transmitted data.

A further object of the invention is to provide an authentication method and communication system that mitigates show-thru.

One or more of the preceding objects, or one or more other objects which will become plain upon consideration of the present specification, are satisfied, at least in part, by the invention described herein.

One aspect of the invention, which satisfies one or more of the above objects, is a method for generating a sender authenticatable codeword for transmission in an uplink to a satellite. The method includes the step of combining an information block and a non-zero authenticating filling sequence block to form a combined block. A parity block is generated over the combined block and appended to the combined block to form a true codeword. The true codeword is then truncated to remove at least a portion, but typically all, of the authenticating filling sequence block from the true codeword to thereby form the authenticatable codeword.

Prior to the step of combining the information block and the authenticating filling sequence block, the method may also include selecting a secret key and a hashing variable and forming the authenticating filling sequence block based on the secret key and hashing variable.

Another embodiment of the invention is a method for authenticating a codeword transmitted in a satellite uplink. The method includes receiving an observable representing an authenticatable codeword and combining an authenticating filling sequence block with the observable to form an extended observable. The method also includes decoding the extended observable to form a decoded observable and an error rate estimate or decoder failure signal. Authenticity is then determined based on the error rate estimate and/or decoder failure indicator.

The encoding and decoding steps may apply Reed-Solomon decoding, for example. Additionally, the decoding step may include establishing at least one threshold error rate or a decoder failure signal. The method may relay the decoded observable onward to the addressee if the error rate estimate does not exceed the threshold error rate (or if there is no decoder failure; i.e., if decoder failure is non-asserted). If the error rate estimate exceeds the threshold error rate or decoder failure is asserted, however, the method may discard the decoded observable.

A further embodiment of the invention is a communication system for generating a sender authenticatable codeword for transmission in an uplink to a satellite. The communication system includes a filling sequence generator including an authenticating filling sequence block output and a merging circuit including a combined block output. The combined block output includes an information block and an authenticating filling sequence block. The system also includes an encoder producing a parity block over a combined block, and a codeword output including the parity block and the information block. The codeword output may be an authenticatable codeword output.

The encoder is connected to the combined block output. The encoder may be, for example, a Reed-Solomon encoder. The communication system may also include a transmitter for transmitting authenticatable codewords over an uplink to a receiving satellite. The system may also include a truncating circuit for removing all, or at least a portion, of the authenticating filling sequence block from a true codeword to form an authenticatable codeword.

### BRIEF DESCRIPTION OF THE DRAWINGS

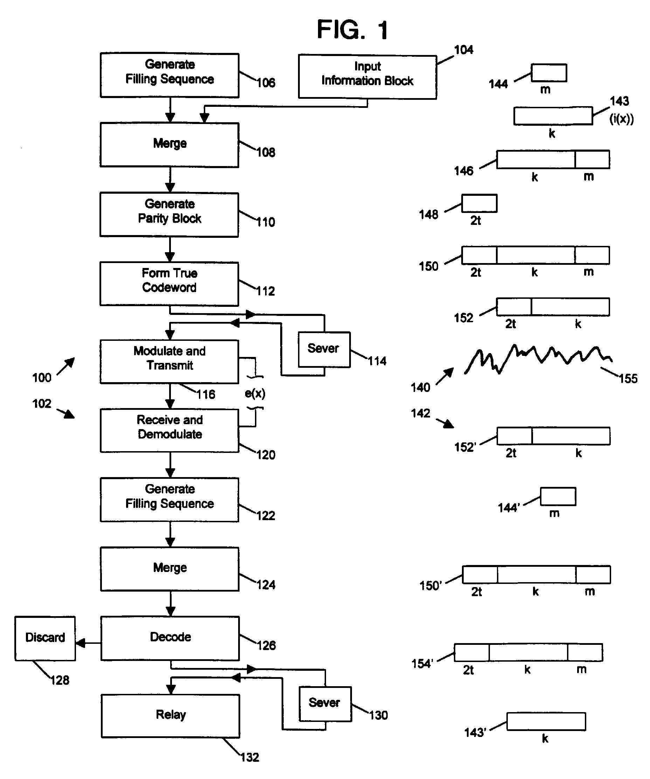

Figure 1 presents flow charts that show a method for generating a sender authenticatable codeword for transmission in an uplink to a satellite and a method for authenticating the sender of an information block transmitted in a satellite uplink. Figure 1 further shows a data chart illustrating how the methods act on the corresponding data.

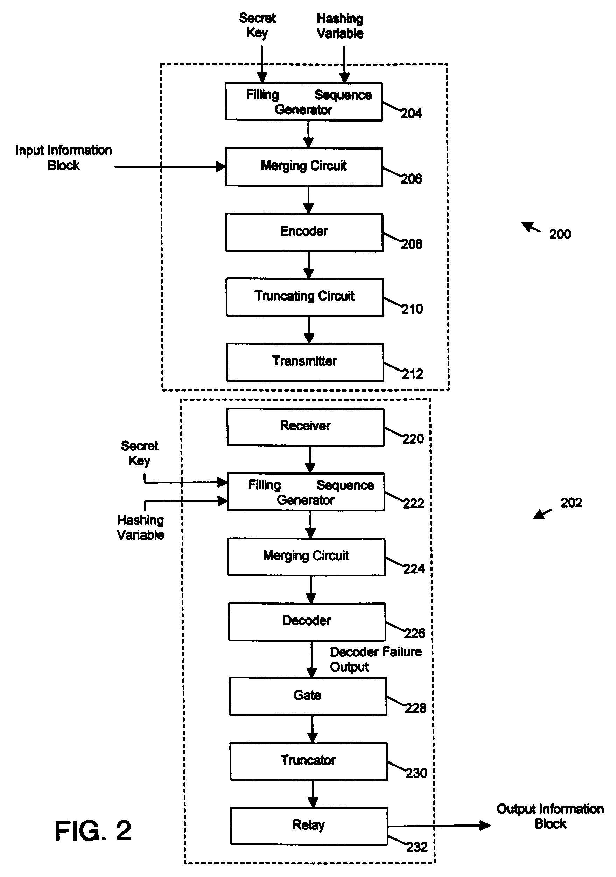

Figure 2 presents block diagrams of a communication system for generating a sender authenticatable codeword for transmission in an uplink to a satellite and a communication system for authenticating the sender of an information block transmitted in a satellite uplink.

### DETAILED DESCRIPTION OF THE INVENTION

The methods, illustrated in Figure 1, and communications systems, illustrated in Figure 2, of the present invention correspond to one another at several points. Accordingly, Figures 1 and 2 will be discussed together.

Turning now to Figure 1, that figure presents a flow chart 100 showing a method for generating a sender authenticatable codeword for transmission in an uplink to a satellite and a flow chart 102 showing a method for authenticating a codeword 152 transmitted in a satellite uplink. The flow chart 100 shows the step of inputting an information block 104 and the step of generating an authenticating filling sequence block 144. The flow chart 100 also shows the steps of merging the information block and the authenticating filling sequence block 108, generating a parity block 110, and forming a true codeword 112. The flow chart 100 then shows the steps of severing part of the true codeword 114 and modulating and transmitting 116.

The flow chart 102 illustrates the steps of receiving and demodulating an observable 120, generating an authenticating filling sequence block 122, and merging the authenticating filling sequence block and the observable 124. The flow chart 102 also shows the steps of decoding an extended observable 126, discarding 128, and severing a decoded observable 130. The flow chart 102 then shows the step of relaying an information block 132.

Figure 1 also presents data charts 140, 142 illustrating the data units that are acted on in the methods 100, 102 shown in Figure 1. The data chart 140 presents the information block 143, a sender's authenticating filling sequence block 144, a combined block 146, a parity block 148, a true codeword 150, an authenticatable codeword 152, and a waveform 155. The data chart 142 presents an observable 152', a receiver's authenticating filling sequence block 144', an extended observable 150', a decoded observable 154', and an authenticated decoded block 104'.

Referring now to the corresponding hardware in Figure 2, that figure shows a block diagram of a communication system 200 for generating a sender authenticatable codeword 152 for transmission in an uplink to a satellite and a communication system 202 for authenticating a codeword transmitted in a satellite uplink. The system 200 includes a filling sequence generator 204, a merging circuit 206, an encoder 208, a truncating circuit 210, and a transmitter 212. The communication system 202 for authenticating the sender of an information block 143 transmitted in a satellite uplink includes a receiver 220, a filling sequence generator 222, a merging circuit 224, a decoder 226, a gate 228, a truncator 230, and a relay facility 232.

Still with reference to Figure 2, the filling sequence generator 222 of the communication system 202 generates an authenticating filling sequence block 144. The filling sequence generator 222 may accomplish this by various methods, such as, for example, selecting a secret key and a hashing variable. The secret key and hashing variable may be selected, for example, through methods known in the field of authentication. The generation of the authenticating filling sequence block 144 corresponds to the generate step 106 of Figure 1.

Once the authenticating filling sequence block 144 is formed, the merging circuit 206 combines the authenticating filling sequence block 144 and an input information block 143 to form a combined block 146. The merging circuit 206 does not need to physically combine in memory the authenticating filling sequence block 144 and the information block 143. Instead, the merging circuit may "combine" the two blocks 143, 144 merely by creating an association (e.g., in a software data structure) between the two blocks 104, 144.

The merger may also be conceptualized as a shift in the position of the authenticating filling sequence block 144 to allow the authenticating filling sequence block 144 and information block 143 to occupy separate portions of the combined block 146. The creation of the combined block may be accomplished, for example, by prepending the authenticating filling sequence block 144 to the information block 143. In this context, prepending refers to combining a second block with a first block in higher order bits than the first block. Thus, when the authenticating filling sequence block 144 is prepended to the information block 143, the authenticating filling sequence block 144 is placed in the higher order bits and the information block 143 remains in the lower order bits. The merger of the authenticating filling sequence block 144 and the information block 143 corresponds to the merge step 108 of Figure 1.

Referring to both Figures 1 and 2, the encoder 208 generates a parity block 148 over the combined block 146. The parity block 148 may be formed either before or after formation of the combined block 146. The timing is unimportant because the parity block 148 formed over the combined block 146 is the sum, using Galois arithmetic, of a parity block formed over the information block 143 (with zeros in the authenticating filling sequence block positions) combined with a parity block formed over the authenticating filling sequence block 144 (with zeros in the information block positions). In either case, the parity block 148 generated by the encoder 208 is a function of the authenticating filling sequence block 144.

The encoder 208 also combines the parity block 148 and the combined block 146 produced in the merging circuit 206 to form a true codeword 150. The generation of the parity block 148 corresponds to the generate parity block step 110 of Figure 1. The formation of the true codeword 150 performed in the encoder 208 corresponds to the form true codeword step 112 of Figure 1.

Preferably, the encoder 208 is a Reed-Solomon encoder, although this is not required. Instead, the methods and communication systems provided in the present invention may be implemented with any error control code that robustly protects against random noise. For example, any forward error correction codes that are members of the BCH family are also suitable.

The formation of the true codeword 150 may also be accompanied (conceptually) by a shift in the combined block 146 by the length of the parity block 148, for example by 2t positions. The shift may be performed, for example, by the merging circuit 206, thereby allowing the parity block 148 and the combined block 146 to occupy separate portions of the true codeword 150. The shifting up of the combined block 146 to allow the parity block 148 to occupy the 2t lower order positions is referred to as postpending the parity block 148 to the combined block 146.

In the illustrated embodiment, after the true codeword 150 is formed, the truncating circuit 210 removes a portion of the authenticating filling sequence block 144 from the true codeword 150 to form an authenticatable codeword 152. Preferably, the truncating circuit 210 removes the entirety of the authenticating filling sequence block 144 producing a k+2t byte authenticatable codeword 152, as shown in Figure 1. The truncation of the true codeword 150 corresponds to the sever step 114 of Figure 1.

As shown in Figure 2, the communication system 200 may also include a transmitter 212 for transmitting the authenticatable codeword 152 over a satellite uplink to a receiving satellite. The transmitter 212 may transmit the authenticatable codeword 152 in a modulated waveform 154, for example. The codeword transmission corresponds to the modulate and transmit step 116 of Figure 1.

With particular reference to Figure 1, the manner in which the communication system 200 acts on the data will now be discussed.

The information block 143 may be k symbols long, as shown in Figure 1, for example, 212 symbols particularly suited for transmitting 4 ATM cells of 53 bytes. In other words and as one example, a shortened RS code used with the communication system 200 allows the information block 143 to be 212 symbols in length.

The authenticating filling sequence block 144 is referred to as an "authenticating" filling block because it is a non-zero filling block and may thus perform an authenticating function. The authenticating filling sequence block 144 has a length of m-bytes, as shown in Figure 1. Preferably, m is less than q, the field size, minus n, the length of the codewords. In fact, the maximum length of the authenticating filling sequence block 144, for use with RS codes and without requiring additional overhead, is q-n-1 symbols which is, for example, 19 for a (236,212) RS code. The authenticating filling sequence block 144 may be shorter than q-n-1 such as, for example, 8 for a (236,212) RS code. The size of the authenticating filling sequence block 144 preferably allows the authenticating filling sequence block 144 to be included in a block of m+n symbols, even if only temporarily, without additional overhead.

The parity block 148 may be 2*t symbols long, as shown in Figure 1, where t represents the number of symbol errors correctable by the RS code. Note that because the parity block 148 in the preferred embodiment is generated over the combined block 146, it is a function of both the information block 143 and the authenticating filling sequence block 144. As a result, the parity block 148 differs from parity blocks that are generated over an information block and an all-zero filling sequence block. Because the parity block 148 is influenced by both the information block 104 and the filling sequence block 144, an authenticatable codeword 152 is produced even though all or part of the authenticating filling sequence block 144 is severed from the true codeword 150 before transmission.

The true codeword 150 may be, for example, k+m+(2*t) symbols in length. This is the sum of the length of the information block 143 (k), the authenticating filling sequence block 144 (m), and the parity block 148 (2*t). For encoders using a shortened RS code, for example, the true codeword 150 may be 255 (212+19+24, for m=19) or 244 (212+8+24, for m=8) symbols in length.

The authenticatable codeword 152 formed in the truncating circuit 210 may have a length x, for example, of n≤x≤n+m symbols. This range exists because the truncating circuit 210 removes at least a portion of the authenticating filling sequence block 144, having a length of m symbols, from the true codeword 150, having a length of n+m symbols, in forming the authenticatable codeword 152. When, as in the preferred embodiment, the truncating circuit 210 removes the entirety of the m-symbol authenticating filling sequence block 144, the authenticatable codeword 152 is n symbols in length. In using a shortened RS code with the GF(256), for example, the authenticatable codeword 152 of n (k+(2*t)) symbols is 236 (212+24) symbols in length.

As is readily seen from the above discussion, the communication system 200 may, for example with a shortened RS code and m=8, begin with a (236,212) code, extend it to a (244,220) code, and truncate it back to a (236,212) code.

Returning again to Figure 2, in a receiving satellite, for example, the filling sequence generator 222 generates a receiver's authenticating filling sequence block 144'. The filling sequence generator 222 may generate the authenticating filling sequence block 144' through various methods, such as, for example, selecting a secret key and a hashing variable. The secret key and hashing variable may be selected, for example, through methods known in the field of authentication. Preferably, for reasons discussed below, the filling sequence generator 222 generates an authenticating filling sequence block 144' identical to a predetermined sender authenticating filling sequence block 144. The generation of the authenticating filling sequence block 144' corresponds to the generate step 122 of Figure 1.

Referring still to Figure 2, the merging circuit 224 receives an observable 152' which represents an authenticatable codeword 152 as received at the satellite, for example as received by the receiver 220. The merging circuit 224 then combines the observable 152' and the authenticating filling sequence block 144' generated in the filling sequence generator 222 to form the extended observable 150'. The operation of the merging circuit 224 corresponds to the merge step 124 of Figure 1.

The merging circuit 224 conceptually shifts the authenticating filling sequence block 144' up n positions in order to allow the observable 152' and authenticating filling sequence block 144' to occupy separate portions of the extended observable 150'. This shifting may be accomplished by prepending the authenticating filling sequence block 144' to the observable 152'.

The decoder 226 of the communication system 202 decodes the extended observable 150' to form a decoded observable 154' and at least one error rate estimate. The decoder 226 preferably is a Reed-Solomon decoder. The decoder 226 then determines the authenticity of the sender's codeword 152 based on the error rate estimate. If the error rate estimate is too high, as discussed below, the gate 228 may discard the decoded observable 154'. The decoder 226 and the gate 228 correspond to the decode 126 and discard 128 steps of Figure 1. An example of the detailed operation of the decoder 226 and gate 228 of the present embodiment is discussed further below.

The communication system 202 may also include a truncator 230 for truncating the decoded observable 154' by removing at least a portion of the authenticating filling sequence block 144' from the decoded observable 154' to form an authenticated decoded block 104'. The truncator 230 preferably removes the entirety of the authenticating filling sequence block 144'. The truncation of the decoded observable 154' corresponds to the sever step 130 of Figure 1.

Referring generally to Figure 2, the receiver 220, filling sequence generators 204, 222, merging circuits 206, 224, encoder 208, decoder 226, gate 228, truncating circuit 210, truncator 230, transmitter 212, and relay 232 may be implemented using combinatorial logic, an ASIC, through software implemented by a CPU, a DSP chip, or the like. The foregoing hardware elements may be part of hardware that is used to perform other operational functions at the sender or receiving satellite. The hashing variables and the secret keys may be stored in registers, RAM, ROM, or the like, and may be generated through software, through a data structure located in a memory device such as RAM or ROM, and so forth.

With particular reference to Figure 1, the manner in which the communication system 202 acts on the data will now be discussed.

The observable 152' received by the merging circuit 224 may be, for example, n (k+2t) symbols in length. The observable 152' represents an authenticatable codeword as received at the satellite; i.e., the observable 152' was sent as an authenticatable codeword 152 from the sender, but may contain noise and other distortions, indicated as error e(X) in Figure 1, due to transmission to the satellite.

The authenticating filling sequence block 144' generated by the filling sequence generator 222 at the receiving satellite may be, for example, m symbols in length, as shown in Figure 1. Just as with the sender's authenticating filling sequence block 144, m is preferably less than q, the field size, minus n, the length of the codewords. This size permits the authenticating filling sequence block to be included within a block of m+n symbols, even if only temporarily, without additional overhead.

In the illustrated embodiment, the extended observable 150' formed by the merging circuit 224 includes the observable 152' and the receiver's authenticating filling sequence block 144' and may thus be n+m symbols in length, as shown in Figure 1. The extended observable 150' may be formed, for example, by prepending the authenticating filling sequence block 144' to the observable 152'. Because the observable 152' includes noise and other distortions e(X), the extended observable 150' will include the noise and other distortions as well.

The decoded observable 154' formed by the decoder 226 includes the extended observable 150' after it has been decoded and thus may be n+m symbols in length.

As discussed below, the decoded observable 154' may be truncated in the truncator 230, in which either the parity block 148 or the authenticating filling sequence block 144', or both (as shown in Figure 1), may be severed from the decoded observable. When both are severed from the decoded observable, the authenticated decoded block 104' may be k symbols in length. When used with a shortened RS code, the decoded observable may be, for example, 212 symbols in length with an RS (236,212) code.

When the communication system 202 is in operation, the receiving satellite's authenticating filling sequence block 144' is preferably identical to the sender's authenticating filling sequence block 144. This can be achieved, for example, by the sender and receiver agreeing on an authenticating filling sequence block, including, for example, a secret key and hashing variable, for both to use to produce the authenticating filling sequence block. When the sender's and receiver's authenticating filling sequence blocks are identical, the authenticating filling sequence blocks contribute equally to the encoding and decoding processes. As a result, the decoder 226 and truncator 230 at the receiving satellite may produce, as the authenticated decoded block 143', the information block 143 inserted into the merging circuit 206 by the sender.

If, however, the sender does not know the receiving satellite's authenticating filling sequence block 144', the sender can only guess at what may be the receiving satellite's authenticating filling sequence block 144'. The probability of guessing each coefficient of the filling sequence correctly is 1/q, where q is the field size. Thus, for an exemplary case where an RS code with the Galois Field of 256 elements is used, the probability that a sender will guess each coefficient of the filling sequence block correctly is 1/256, or 3.90625 x 10⁻³.

As a result, the probability that a sender would guess an entire receiver's authenticating filling sequence block 144' correctly is (1/q)^{*m*}, where m is the length of the authenticating filling sequence block 144'. The value of (1/q)^{*m*} is negligibly small, approximately 1.7516 x 10⁻⁴⁶, when the maximum value in the GF(256) with n=236 of m=19 is used. Because of the relationship between q and m, a smaller number for m will still yield stringent authentication results. For example, if m=8, the probability that a randomly chosen sender's authenticating filling sequence block 144 will equal the receiver's authenticating filling sequence block 144' is approximately one in sixteen billion billion (corresponding to a value of (1/q)^{*m*} of approximately 5.4210 x 10⁻²⁰). Thus, while the maximum value of m may be used, shorter authenticating filling sequence blocks will still yield stringent authentication results.

When errors occur in the decoding process, the receiving satellite can exhibit decoder failure for two primary reasons: 1) where errors occur in positions that were not actually transmitted over the channel (i.e., for positions ≥n, the location of the authenticating filling sequence block in the extended observable 150'); and 2) where more errors than the decoder was designed to remove (for example, more than t errors) occur. When decoder failure occurs for either of these reasons, the decoder 226 may output a decoder failure signal.

The former reason for decoder failure may occur when the receiving satellite does not know the sender's authenticating filling sequence block 144 (f_{*s*}(X)). In such a case, as discussed above, the receiving satellite almost certainly uses a different authenticating filling sequence block 144' in decoding. The differences between f_{*s*}(X) and the receiver's authenticating filling sequence block 144' (f_{*r*}(X)) will show up as the equivalent of additional transmission errors in the decoding process at the satellite. Specifically, these differences will appear for polynomial coefficients with indices greater than or equal to n. Thus, the errors due to the difference between f_{*s*} (X) and f_{*r*}(X) are distinguishable from regular transmission errors.

For this reason, the decoder 226 may establish a threshold error rate for the authenticating filling sequence block 144' of the decoded observable 154' and also may form an error rate estimate for the authenticating filling sequence block 144' of the decoded observable 154'. Preferably, the threshold error rate for the authenticating filling sequence block is zero, so that even one error causes the threshold error rate to be exceeded, a decoder failure signal to be outputted, and the decoded observable 154' to be discarded.

The latter reason for decoder failure occurs when the decoding process results in more errors than the decoder was designed to remove (e.g., more than t errors). For this reason, the gate 228 may be adapted to discard the decoded observable when the decoder 226 asserts decoder failure.

As indicated above, the detailed operation of the decoder 226 and gate 228 according to the present embodiment will now be discussed. The decoder 226 forms an error rate estimate, which may be obtained, for example, from decoding the extended observable 150'. The decoder 226 may form an error rate estimate for the authenticating filling sequence block 144' of the decoded observable.

Once the error rate estimate is formed, the decoder 226 then determines the authenticity of, for example, the codeword 152 based on the error rate estimate. The decoder 226 may accomplish this authentication by, for example, establishing a threshold error rate and determining whether the error rate estimate exceeds the threshold error rate. It is worth noting that the decoder 226 determines the authenticity of the codeword 152, not the sender. This is because the decoder 226 does not need to know or determine who the sender is. The fact that a codeword 152 is authentic may mean, however, that the sender was authorized.

The threshold error rate may be established, for example, for either an overall error rate, such as, for example, t symbols, or for an error rate for the authenticating filling sequence block 144' of the decoded observable, or both. When the threshold error rate is established for the authenticating filling sequence block 144', the decoder 226 may be capable of detecting errors that occur due to the difference between f_{*s*}(X) and f_{*r*}(X). As a result, the decoder 226 may be able to detect errors that occur due to both of the two primary reasons for decoder failure, as discussed above.

Referring again to Figure 2, the communication system 202 in this embodiment includes a gate 228 adapted to discard the decoded observable 154' when the decoder 226 determines that the error rate estimate exceeds the threshold error rate. When the gate 228 discards the decoded observable, the receiving satellite prevents access by unauthorized users since the discarded blocks need not be further processed at the satellite.

Still referring to Figure 2, the communication system 202 in the present embodiment also includes a relay 232 for passing on the decoded observable 154' when the decoder 226 determines that the error rate estimate does not exceed the threshold error rate. When f_{*s*}(X) and f_{*r*}(X) are identical, such as for authorized users, the error rate estimate likely will not exceed the threshold error rate. As a result, authorized users are permitted to use the satellite to transmit their information. Onward transmission of the decoded observable 154' or the authenticated decoded block 104' by the relay 232 corresponds to the relay step 132 of Figure 1.

Additionally, show-thru is alleviated using the present invention. Assuming that the authenticating filling sequence blocks in beams A and B are f_{*A*}(X) and f_{*B*}(X), respectively, if no burst is sent in beam A but a burst is sent in beam B that may show-thru, f_{*s*}(X)=f_{*B*}(X) and f_{*r*}(X)=f_{*A*}(X). Since the authenticating filling sequence blocks fₛ(X) and f_{*r*}(X) differ, the decoded observable will either contain more than t errors with high probability or the decoder will locate apparent errors at positions higher than or equal to n. As a result, bursts from another beam that could otherwise show-thru are rejected with high probability.

While particular elements, embodiments and applications of the present invention have been shown and described, it is understood that the invention is not limited thereto since modifications may be made by those skilled in the art, particularly in light of the foregoing teaching. It is therefore contemplated by the appended claims to cover such modifications and incorporate those features which come within the spirit and scope of the invention.

## Claims

1. A method for generating a sender authenticatable codeword for transmission in an uplink to a satellite, the method comprising:
combining an information block and an authenticating filling sequence block to form a combined block;
generating a parity block over said combined block;
combining said parity block and said combined block to form a true codeword; and
truncating said true codeword to remove at least a portion of said authenticating filling sequence block from said true codeword thereby forming an authenticatable codeword.

2. The method of claim 1 wherein said truncating step comprises removing the entirety of said authenticating filling sequence block from said true codeword.

3. The method of claim 1 wherein said generating step comprises generating a parity block using Reed-Solomon encoding.

4. The method of claim 1 further comprising, prior to said step of combining an information block and an authenticating filling sequence block:
selecting a secret key;
selecting a hashing variable; and
forming said authenticating filling sequence block based on said secret key and said hashing variable.

5. The method of claim 1 wherein said step of combining an information block and an authenticating filling sequence block comprises combining a non-zero authenticating filling sequence block with the information block.

6. A method for authenticating a codeword transmitted in a satellite uplink, the method comprising:
receiving an observable representing an authenticatable codeword as received at a satellite;
combining an authenticating filling sequence block with said observable to form an extended observable;
decoding said extended observable to form a decoded observable and at least one error rate estimate; and
determining authenticity based on said error rate estimate.

7. The method of claim 6 wherein said decoding step comprises decoding using Reed-Solomon decoding.

8. The method of claim 6 wherein said decoding step comprises:
establishing at least one threshold error rate; and
discarding said decoded observable when said at least one error rate estimate exceeds said at least one threshold error rate.

9. The method of claim 6 further comprising, prior to said combining step:
selecting a secret key;
selecting a hashing variable; and
forming said authenticating filling sequence block based on said secret key and said hashing variable.

10. The method of claim 6 wherein said combining step comprises combining a non-zero authenticating filling sequence block with said observable.

11. A communication system for generating a sender authenticatable codeword for transmission in an uplink to a satellite comprising:
a filling sequence generator including an authenticating filling sequence block output;
a merging circuit, connected to said authenticating filling sequence block output and an information block output, said merging circuit including a combined block output comprising an information block and an authenticating filling sequence block;
an encoder connected to said combined block output and producing a parity block over said combined block; and
a codeword output comprising said parity block and said information block.

12. The communication system of claim 11:
wherein said codeword output is a true codeword output and further comprises said authenticating filling sequence block; and
further comprising a truncating circuit connected to said true codeword output, said truncating circuit removing at least a portion of said authenticating filling sequence block from a true codeword to form said authenticatable codeword.

13. The communication system of claim 11 wherein said encoder comprises a Reed-Solomon encoder.

14. A communication system for authenticating a codeword transmitted in a satellite uplink comprising:
a filling sequence generator including an authenticating filling sequence block output;
a merging circuit connected to said authenticating filling sequence block output and an observable output, and including an extended observable output comprising a received observable and an authenticating filling sequence block;
a decoder connected to said extended observable output and including an error rate estimate output and a decoded observable output.

15. The communication system of claim 14 further comprising a truncator connected to said decoded observable output, said truncator removing at least a portion of said authenticating filling sequence block from a decoded observable to form an authenticated decoded block.

16. The communication system of claim 14 wherein said decoder further comprises:
a threshold error rate; and
a decoder failure output responsive to said threshold.

17. The communication system of claim 14 wherein said merging circuit comprises an authenticating filling sequence block identical to a predetermined sender authenticating filling sequence block.
